Europäisches Patentamt

European Patent Office

Office européen des brevets

(19)

(11) Numéro de publication: **0 262 015 B1**

# (12) FASCICULE DE BREVET EUROPEEN

(45) Date de publication de fascicule du brevet:
27.11.91

(51) Int. Cl.⁵: **G01N 23/18**

(21) Numéro de dépôt: 87401941.7

(22) Date de dépôt: **28.08.87**

(54) **Procédé de contrôle radiographique de la soudure d'un tube sur une plaque tubulaire , et dispositif de mise en oeuvre de ce procédé.**

(30) Priorité: 01.09.86 FR 8612282

(43) Date de publication de la demande:
30.03.88 Bulletin 88/13

(45) Mention de la délivrance du brevet:
27.11.91 Bulletin 91/48

(84) Etats contractants désignés:
**AT BE DE FR GB IT**

(56) Documents cités:
**FR-A- 2 011 646**
**GB-A- 1 272 404**
**GB-A- 2 109 660**
**US-A- 3 254 224**

**PATENT ABSTRACTS OF JAPAN, vol. 5, no. 130 (P-76)[802], 20 août 1981; & JP-A-56 69 540**

**PATENT ABSTRACTS OF JAPAN, vol. 4, no. 51, 17 avril 1980, page 17 P 7; & JP-A-55 20 490**

(73) Titulaire: **STEIN INDUSTRIE Société Anonyme dite:**
**19-21, avenue Morane Saulnier**
**F-78140 Vélizy Villacoublay(FR)**

(72) Inventeur: **Delahaye, Patrick**
**57 rue La Fontaine**
**F-59290 Wasquehal(FR)**
Inventeur: **Delevaque, Jean-Marc**
**56 avenue Henri Barbusse**
**F-62440 Harnes(FR)**

(74) Mandataire: **Weinmiller, Jürgen et al**
**Lennéstrasse 9 Postfach 24**
**W-8133 Feldafing(DE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de contrôle radiographique du cordon de soudure de l'extrémité d'un tube de faisceau tubulaire sur une face d'une plaque tubulaire, dans lequel on introduit, dans une période d'introduction, à l'intérieur du tube et dans son axe une source de rayonnement radioactif, et on introduit derrière le cordon de soudure par rapport à la source, une plaque radiographique comprenant au moins un film disposé entre des écrans de plomb de faible épaisseur, protégé de la lumière par une enveloppe en matière thermoplastique transparente au rayonnement radioactif, on laisse le rayonnement radioactif impressionner le film, on retire la source de rayonnement du tube du faisceau tubulaire et on effectue le développement du film. Elle s'étend en outre à un dispositif de mise en oeuvre de ce procédé.

Il a été proposé dans le document GB-A-1272404 un procédé de contrôle radiographique du cordon de soudure de l'extrémité d'un tube de faisceau tubulaire sur la face interne d'une plaque tubulaire, dans lequel on dispose autour de l'extrémité du tube un manchon cylindrique en matière plastique transparent au rayonnement radiographique, et autour de ce dernier une plaque photographique cylindrique, comprenant un film radiographique disposé entre deux écrans de plomb de faible épaisseur, protégé de la lumière par une enveloppe en matière plastique également transparente au rayonnement. On dispose à l'intérieur du trou de la plaque tubulaire correspondant au tube une source de rayonnement radiographique, on laisse le rayonnement radioactif impressionner le film, on retire la source de rayonnement radioactif et on effectue le développement du film.

Un tel procédé n'est pas adapté au contrôle radiographique du cordon de soudure d'un tube dont le bord vient affleurer la face externe de la plaque tubulaire.

Il ne permet pas d'obtenir des images radiographiques très nettes, car le film radiographique est également impressionné par le rayonnement émis pendant les périodes d'introduction et de retrait de la source radioactive. Il ne protège pas les opérateurs contre le rayonnement radioactif rétrodiffusé.

La présente invention a pour but de procurer un procédé et un dispositif qui permette le contrôle radiographique du cordon de soudure entre une plaque tubulaire et l'extrémité d'un tube dont le bord vient à proximité de la face externe de la plaque tubulaire, qui procure des images nettes du cordon de soudure et qui protège au mieux les opérateurs du rayonnement radioactif, tout en étant relativement simple et peu coûteux, compte tenu du très grand nombre de cordon de soudure entre une plaque tubulaire et les tubes qui le traversent.

Le procédé selon l'invention est caractérisé en ce que :

a) la plaque radiographique et son enveloppe sont de forme rectangulaire disposés contre la face externe de la plaque tubulaire et le bord du tube soudé à celle-ci, coaxialement à l'axe du tube, et percés d'un trou central de diamètre inférieur à celui du tube, la plaque radiographique est constituée de deux films très lents et à grains fins, et l'enveloppe est constituée par deux rondelles dont l'une comporte un rebord annulaire venant recouvrir le bord de la plaque radiographique près du trou central,

b) on place derrière la plaque radiographique une plaque de plomb d'épaisseur suffisante pour arrêter le rayonnement rétrodiffusé de ladite source radioactive,

c) on introduit dans le tube du faisceau tubulaire à l'intérieur d'un tube d'introduction et d'éjection la source de rayonnement radioactif de dimensions de l'ordre du millimètre, d'activité inférieure à 300 becquerels, à une distance de la plaque tubulaire suffisante pour qu'un enregistrement sur les films radiographiques présente une bonne netteté en une courte période d'introduction,

d) on laisse le rayonnement de la source impressionner les films pendant une période de pose très supérieure à la période d'introduction, pour diminuer l'influence du rayonnement intervenu pendant les périodes d'introduction et d'éjection, et

e) on retire le tube d'introduction et d'éjection et la source de rayonnement du tube du faisceau tubulaire pendant une courte période d'éjection.

Il répond en outre à au moins l'une des caractéristiques suivantes :

- On place la source de rayonnement à l'extrémité avant d'un tube d'introduction et d'éjection, derrière un embout de centrage muni d'un organe de blocage en position de radiographie, que l'on fait coulisser dans le tube du faisceau tubulaire pour l'introduction, puis l'éjection.

- On enfile autour du tube d'introduction et d'éjection une bague de centrage en élastomère de façon qu'elle se fixe à l'entrée du tube du faisceau tubulaire.

- Le tube d'introduction et d'éjection est solidaire d'un vérin pneumatique, il comporte à l'avant de la source de rayonnement radioactif au moins une bague élastique, et l'on met en compression la ou les bagues élastiques au moment où la source est parvenue au voisinage de la position de radiographie du cordon de soudure par manoeuvre du piston du vérin.

- On assure la mise en compression de la ou des bagues élastiques par déclenchement du vérin pneumatique sollicitant une tige solidaire du piston du vérin dans le sens du retrait du tube du faisceau tubulaire.

Un dispositif de mise en oeuvre de ce procédé comprenant une plaque radiographique comprenant au moins un film disposé entre des écrans de plomb de faible épaisseur, protégé de la lumière par une enveloppe en matériau thermoplastique transparente au rayonnement radioactif, et une source de rayonnement radioactif, est caractérisé en ce que :

a) la plaque radiographique est de forme rectangulaire et composée de deux films photographiques très lents et à grains fins, et percée d'un trou central de diamètre inférieur à celui du tube, sur les faces de laquelle sont appliquées des rondelles, dont l'une comporte un rebord annulaire venant recouvrir le rebord des films près du trou central, et constituant l'enveloppe en matière thermoplastique transparente au rayonnement radioactif, également rectangulaire.

b) il comporte en outre une plaque de plomb d'épaisseur suffisante pour arrêter le rayonnement radioactif rétrodiffusé, disposée sur l'arrière de la plaque radiographique, et

c) il comporte en outre un tube d'introduction et d'éjection de la source de rayonnement radioactif, de diamètre inférieur au diamètre interne du tube du faisceau tubulaire, comportant à son extrémité avant des moyens élastiques de centrage puis une cavité de logement de la source.

Selon une première variante, les moyens de guidage élastique sont constitués par un embout à branches élastiques. Le dispositif comporte alors en outre une bague de centrage en élastomère élastique, de diamètre externe légèrement supérieur au diamètre interne du tube soudé à la plaque tubulaire, en état de compression.

Selon une autre variante, le tube d'introduction et d'éjection de la source de rayonnement radioactif est solidaire d'un vérin pneumatique, et son extrémité avant est formée par une entretoise munie d'au moins une bague radialement expansible. Le piston du vérin pneumatique est alors, muni d'une tige coulissant dans l'entretoise et solidaire d'un embout adjacent à la bague et susceptible de comprimer celle-ci, et il est disposé dans le vérin de manière à être repoussé par rapport au film radiographique lors de l'établissement de la pression dans le vérin.

La source de rayonnement radioactif est constituée d'iridium 192 ou d'ytterbium 169.

Il est décrit ci-après, à titre d'exemple et en référence aux figures schématiques du dessin annexé, deux dispositifs de contrôle radiographique de soudures de tube dans une plaque tubulaire selon l'invention et leur fonctionnement. On notera que certaines épaisseurs y ont été exagérées pour plus de clarté, et ne correspondent nullement aux proportions relatives des différents éléments du dispositif.

La figure 1 représente un dispositif de contrôle à mise en place manuelle de la source radioactive.

La figure 2 représente un vérin pneumatique de mise en place de la source radioactive, avant sa manoeuvre pour blocage de la source radioactive en position de fonctionnement.

La figure 3 représente le tube dont la soudure est à contrôler et le vérin de mise en place de la source après manoeuvre de ce dernier.

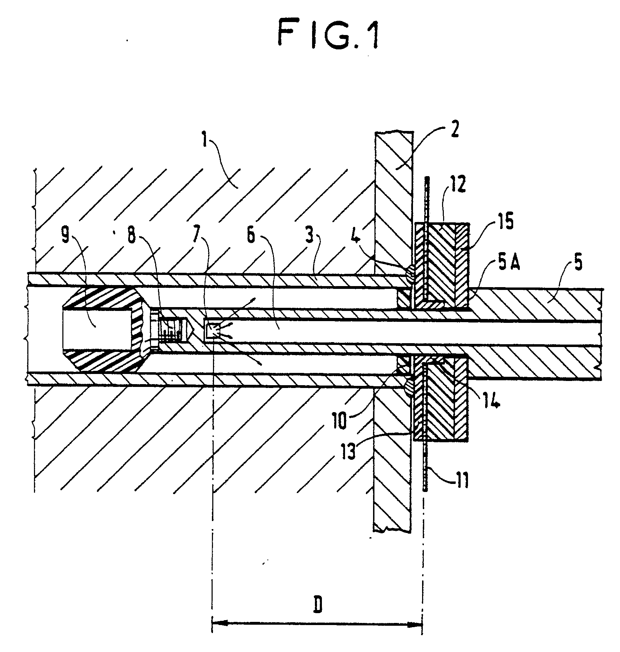

Dans la figure 1, la plaque tubulaire 1 est munie d'une couche de revêtement 2. Le tube 3 du faisceau tubulaire est soudé à la plaque tubulaire au niveau de son revêtement par la soudure circonférentielle 4, dont on veut vérifier la compacité. A cet effet, on introduit dans le tube 3 un tube portesource allongé 5, percé d'un alésage borgne 6, au fond duquel est placée la source radioactive 7, soit de l'iridium 192, soit de l'ytterbium 169, de très faibles dimensions, par exemple 3mm x 2mm ou 2,5mm x 2,5mm ou même 1mm x 1mm ou 1mm x 0,5mm. Cette source doit être d'activité inférieure à 300 becquerels, par exemple de 200 becquerels, afin de conserver un rapport temps de pose/temps de transfert en position de la source supérieur à 20. Un écran de plomb 15 d'épaisseur au moins égale à 5mm diminue l'influence du transfert de la source dans sa position de fonctionnement sur l'impression du film par le rayonnement et protège l'opérateur.

Le film 11 sur lequel doit être enregistrée l'image de la soudure est un double film, dont chacune des feuilles est un film très lent et à grains fins, du type commercialisé par les sociétés Kodak sous la désignation R ou Agfa sous la désignation D2. Ces films sont disposés en sandwich entre trois écrans de plomb de très faible épaisseur (environ 0,05mm), du type "rayons X". Ceci permet de renforcer la qualité d'image et d'augmenter le temps de pose, qui doit être d'au moins 30 secondes.

L'emploi d'un double film permet par ailleurs de se garantir contre les défauts d'émulsion et de permettre l'examen total de la soudure, en interprétant la zone proche du centre du tube en simple film et les zones éloignées, pour lesquelles le rayonnement traverse une épaisseur d'acier plus importante, en double film.

Les minces écrans de plomb disposés de part et d'autre des films et entre eux ont pour objet de renforcer le contraste du film en produisant un rayonnement électronique secondaire. Ces écrans ne sont pas revêtus de papier pour réduire au maximum leur épaisseur.

L'ensemble des films et des écrans de plomb est contenu dans une enveloppe rectangulaire thermosoudée en matière plastique imperméable à la lumière du jour, mais perméable au rayonnement radioactif, telle que le polytétrafluoréthylène, composée de deux rondelles encastrables, l'une 12 opposée à la plaque tubulaire, et l'autre 13 tournée du côté de celle-ci. Cette enveloppe est percée d'un trou central non thermosoudé, la rondelle 13 du côté de la plaque tubulaire venant recouvrir par son rebord annulaire 14 les bords de ce trou central. Du fait que le trou central n'est pas thermosoudé, et que l'on utilise les rondelles, le diamètre de perçage du film peut être réduit afin d'interpréter la totalité du cordon de soudure. Par exemple, si les bords internes de l'enveloppe étaient thermosoudés, il faudrait une distance de 1 mm entre le bord interne des films et le bord du trou central. L'utilisation des rondelles dont l'une est pourvu d'un rebord annulaire permet de réduire cette distance à 0,3 mm, ce qui correspond à un gain radial de 0,7 mm de film.

Pour vérifier la bonne qualité de la radiographie, on peut utiliser un indicateur DIN à fils de plomb parallèles, coupé en deux et disposé entre le film et la soudure, mais on peut aussi faire un essai préliminaire sur une pièce témoin présentant des trous calibrés de diamètres connus.

Le tube porte-source 5 comporte l'alésage central borgne 6 au fond duquel est introduite la source radioactive 7 au moment de son emploi, et un épaulement 5A. Son extrémité est munie d'un taraudage 8 dans lequel se visse un boulon support d'un guide d'extrémité 9 du tube en élastomère, à trois branches qui viennent prendre appui sur le pourtour du tube d'échange de chaleur et maintenir la source en une position déterminée par rapport à la soudure à contrôler. Par ailleurs, une bague de centrage 10 en élastomère, enfilée autour du tube porte-source de manière à ne pas se projeter sur les zones de la soudure à examiner, permet d'améliorer le positionnement du film par rapport à la soudure.

L'opération de contrôle radiographique de la soudure s'effectue comme suit. On introduit la source radioactive au fond du tube porte-source, puis enfonce rapidement ce dernier dans le tube d'échangeur jusqu'à ce que son épaulement 5A vienne en butée contre l'écran de plomb 15, la position de cet épaulement étant telle que la source se trouve à une distance bien précise D du film et voie la soudure sous un angle assurant une radiographie nette.

Le guide d'extrémité 9 du tube assure le maintien de la source dans une position fixe. On laisse alors la source irradier la soudure pendant le temps de pose choisi, dont on a vu qu'il doit être au moins 20 fois supérieur au temps de transfert de la source en position. Ce temps sera en pratique déterminé par une série d'essais de façon à obtenir sur le film des densités en double film de 1,8 à 3,5 (zones les plus éloignées du centre du film) ou en simple film de 1 à 1,7. Puis on retire rapidement le tube porte-source. On retire la cartouche contenant le film radiographique et procéde au développement de ce dernier.

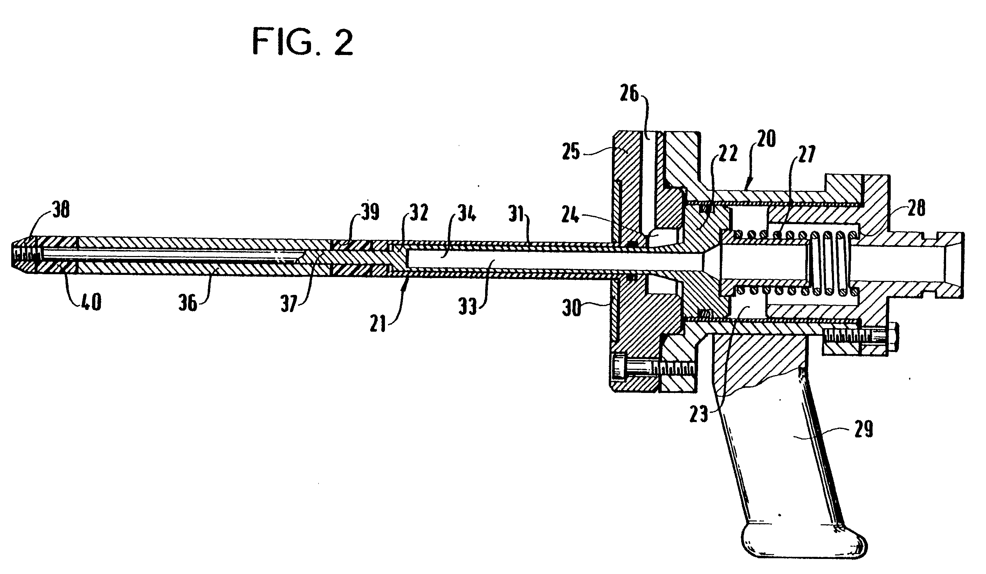

Le vérin pneumatique de mise en place de la source radioactive de la figure 2 comprend un corps de vérin 20 et un tube porte-source 21 à entretoise de guidage. Le corps de vérin 20 contient un piston 22 mobile dans une cavité cylindrique 23. A l'avant du piston, une cavité 24 pratiquée au centre de la face avant 25 du boîtier du vérin, peut être mise en liaison avec une source d'air comprimé par un conduit 26.

Le piston 22 est maintenu au repos en position avancée par le ressort hélicoïdal 27, prenant appui sur une butée 28.

Une poignée 29 permet la mise en position du tube porte-source dans le tube d'échange de chaleur dont la soudure sur la plaque tubulaire est à vérifier. A l'avant du corps du vérin, une plaque circulaire en plomb 30 assure le blocage du vérin contre la plaque tubulaire et la protection biologique.

Le tube porte-source 21 se compose d'un tube externe fixe 31, solidaire de la face avant 25 du boîtier du vérin, et d'un tube interne 32 mobile à l'intérieur du précédent, et percé d'un alésage 33 dont l'extrémité avant 34 sert de logement à la source radioactive. Le tube externe 31 se prolonge par une entretoise de guidage 36, percée d'un alésage dans lequel peut coulisser la tige de piston 37.

Cette dernière se termine à son extrémité avant par un embout vissé 38. L'entretoise de guidage 36 est munie de deux rondelles en élastomère, l'une 39 à proximité du fond de son alésage dans lequel coulisse le tube interne, et l'autre 40 à son extrémité avant, derrière l'embout 38.

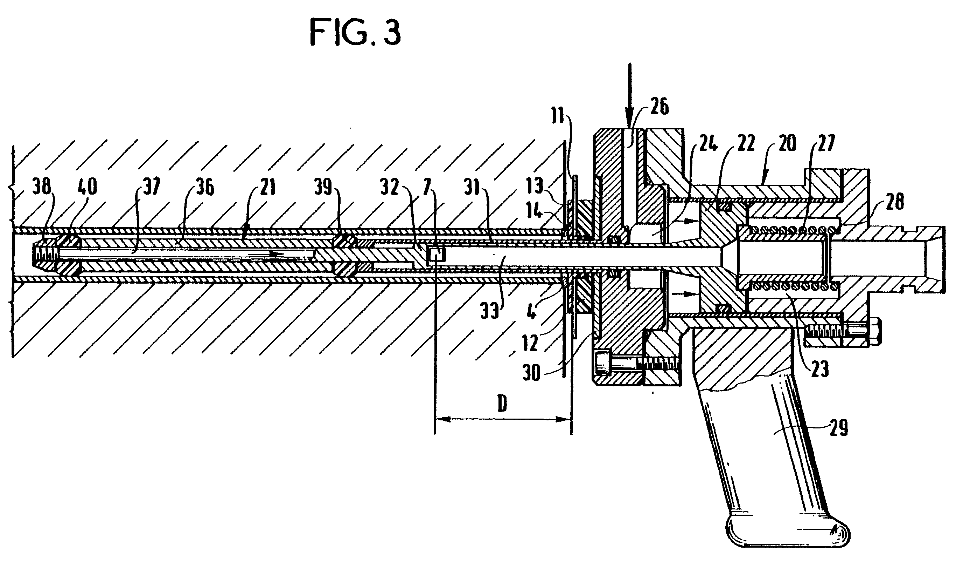

Le fonctionnement du vérin de mise en place de la source radioactive est le suivant. On introduit la source 7 au fond 34 de l'alésage 33 du tube interne 32, puis on fait pénétrer rapidement le tube externe fixe 31 dans le tube d'échangeur dont la soudure est à vérifier jusqu'à ce que la plaque de blocage 30 vienne au contact de la face de la plaque tubulaire. Le tube externe 31 étant arrivé en position, on déclenche le vérin. La pression d'air arrivant par le conduit 26 repousse vers l'arrière le piston 22, et par suite le tube interne 32 solidaire de celui-ci, qui recule avec sa tige de piston 37 comme représenté par la flèche de la figure 3. Les bagues élastiques 39 et 40, en contact avec la paroi interne du tube de l'échangeur sont comprimées, se gonflent et bloquent le tube interne 32, et par suite la source radioactive 7, dans une position bien définie à la distance D du film derrière la soudure a contrôler. On laisse alors la source en position active pendant le temps de pose désiré. Lcrsque celui-ci est terminé, on déclenche en sens contraire le vérin. La pression ne n'exerçant plus sur la face avant du piston, le ressort 27 repousse le piston et le tube intérieur vers l'avant. Les bagues élastiques 39 et 40 se décollent de la paroi du tube d'échangeur. On retire alors rapidement le tube externe de l'intérieur du tube de l'échangeur. Puis on retire l'enveloppe contenant le film radiographique et effectue le développement de celui-ci.

## Revendications

1. Procédé de contrôle radiographique du cordon de soudure (4) de l'extrémité d'un tube de faisceau tubulaire (3) sur une face d'une plaque tubulaire (1), dans lequel on introduit, dans une période d'introduction, à l'intérieur du tube (3) et dans son axe une source de rayonnement radioactif (7), et on introduit derrière le cordon de soudure (4) par rapport à la source (7), une plaque radiographique (11) comprenant au moins un film disposé entre des écrans de plomb de faible épaisseur, protégé de la lumière par une enveloppe en matière thermoplastique transparente au rayonnement radioactif (12 , 13), on laisse le rayonnement radioactif (7) impressionner le film, on retire la source de rayonnement (7) du tube (3) du faisceau tubulaire et on effectue le développement du film, caractérisé en ce que :

   a) la plaque radiographique (11) et son enveloppe sont de forme rectangulaire, disposés contre la face externe de la plaque tubulaire (1) et le bord du tube (3) soudé à celle-ci, coaxialement à l'axe du tube (3) et percés d'un trou central de diamètre inférieur à celui du tube (3), la plaque radiographique (11) est constituée de deux films très lents et à grains fins, et l'enveloppe est constituée par deux rondelles (12, 13) dont l'une (13) comporte un rebord annulaire (14) venant recouvrir le bord de la plaque radiographique (11) près du trou central,

   b) on place derrière la plaque radiographique (11) une plaque de plomb (15, 30) d'épaisseur suffisante pour arrêter le rayonnement rétrodiffuse de ladite source radioactive (7),

   c) on introduit dans le tube (3) du faisceau tubulaire à l'intérieur d'un tube d'introduction et d'éjection (5) la source de rayonnement radioactif (7) de dimensions de l'ordre du millimètre, d'activité inférieure à 300 becquerels, à une distance de la plaque tubulaire (1) suffisante pour qu'un enregistrement sur les films radiographiques présente une bonne netteté en une courte période d'introduction,

   d) on laisse le rayonnement de la source (7) impressionner les films pendant une période de pose très supérieure à la période d'introduction, pour diminuer l'influence du rayonnement (7) intervenu pendant les périodes d'introduction et d'éjection, et

   e) on retire le tube d'introduction et d'éjection (5) et la source de rayonnement (7) du tube du faisceau tubulaire (3) pendant une courte période d'éjection.

2. Procédé selon la revendication 1, caractérisé en ce que l'on place la source de rayonnement radioactif (7) à l'extrémité avant du tube d'introduction et d'éjection (5), derrière un embout de centrage (9) muni d'un organe de blocage, que l'on fait coulisser dans le tube (3) du faisceau tubulaire pour l'introduction, puis pour l'éjection.

3. Procédé selon la revendication 2, caractérisé en ce que l'on enfile autour de l'organe tubulaire d'introduction et d'éjection (5) une bague de centrage en élastomère (10) de façon qu'elle se fixe à l'entrée du tube (3) du faisceau tubulaire.

4. Procédé selon la revendication 1, caractérisé en ce que le tube d'introduction et d'éjection (5) est solidaire d'un vérin pneumatique (20), en ce qu'il comporte à l'avant de la source de rayonnement radioactif (7) au moins une bague élastique (39, 40), et en ce que l'on met en compression la ou les bagues élastiques (39, 40) au moment où la source (7) est parvenue au voisinage de la position de radiographie du cordon de soudure (4) par manoeuvre du piston (22) du vérin (20).

5. Procédé selon la revendication 4, caractérisé en ce que l'on assure la mise en compression de la ou des bagues élastiques (39, 40) par déclenchement du vérin peneumatique (20) sollicitant une tige (37) solidaire du piston (22) du vérin (20) dans le sens du retrait du tube (3) du faisceau tubulaire.

6. Dispositif de mise en oeuvre du procédé selon l'une quelconque des revendications 1 à 5, comprenant une plaque radiographique (11) comprenant au moins un film disposé entre des écrans de plomb de faible épaisseur, protégé de la lumière par une enveloppe en matériau thermoplastique transparente au rayonnement radioactif, (12, 13), et une source de rayonnement radioactif (7),

caractérisé en ce que :

a) la plaque radiographique (11) est de forme rectangulaire et composée de deux films photographiques très lents et à grains fins, et percée d'un trou central de diamètre inférieur à celui du tube (3), sur les faces de laquelle sont appliquées des rondelles (12, 13) dont l'une (13) comporte un rebord annulaire (14) venant recouvrir le rebord des films près du trou central, et constituant l'enveloppe en matière thermoplastique transparente au rayonnement radioactif, également rectangulaire,

b) il comporte en outre une plaque de plomb (15, 30) d'épaisseur suffisante pour arrêter le rayonnement radioactif rétrodiffusé, disposée sur l'arrière de la plaque radiographique (11), et

c) il comporte en outre un tube (21) d'introduction et d'éjection de la source de rayonnement radioactif (7), de diamètre inférieur au diamètre interne du tube (3) du faisceau tubulaire, comportant à son extrémité avant des moyens élastiques (9, 39, 40) de centrage puis une cavité (34) de logement de la source (7).

7. Dispositif selon la revendication 6, caractérisé en ce que les moyens de guidage élastique sont constitués par un embout (9) à branches élastiques.

8. Dispositif selon les revendications 6 ou 7, caractérisé en ce qu'il comporte en outre une bague de centrage en élastomère (10), de diamètre externe légèrement supérieur au diamètre interne du tube (3) soudé à la plaque tubulaire (1), en état de compression.

9. Dispositif selon la revendication 6, caractérisé en ce que le tube d'introduction et d'éjection (21) de la source de rayonnement radioactif (7) est solidaire d'un vérin pneumatique (20), et en ce que son extrémité avant est formée par une entretoise (36) munie d'au moins une bague radialement expansible (39, 40).

10. Dispositif selon la revendication 9, caractérisé en ce que le piston (22) du vérin pneumatique est muni d'une tige (37) coulissant dans l'entretoise (36) et solidaire d'un embout (38) adjacent à la bague (39, 40) et susceptible de comprimer celle-ci, et en ce qu'il est disposé dans le vérin (20) de manière à être repoussé par rapport au film radiographique (11) lors de l'établissement de la pression dans le vérin (20).

11. Dispositif selon l'une des revendications 6 à 10, caractérisé en ce que la source de rayonnement radioactif est constituée d'iridium 192 ou d'ytterbium 169.

## Claims

1. A method of radiographically inspecting a weld fillet (4) at the end of a tube in a bundle of tubes (3) and on one face of a tube plate (1), in which method a source of radioactive radiation (7) is inserted during an insertion period inside the tube (3) and on its axis, and a radiographic plate (11) comprising at least one film disposed between thin lead screens and protected from light by an envelope (12, 13) of thermoplastic material which is transparent to the radioactive radiation is placed behind the weld fillet (4) relative to the source (7), the radioactive radiation (7) is allowed to mark the film, the source of radiation (7) is withdrawn from the tube (3) in the bundle of tubes, and the film is developed, the method being characterized in that:

a) the radiographic plate (11) and its envelope are rectangular in shape, being disposed against the outside face of the tube plate (1) and the edge of the tube (3) welded thereto, coaxially with the axis of the tube (3), and are pierced by a central hole of diameter smaller than the diameter of the tube (3), the radiographic plate (11) being constituted by two very slow and fine-grain films, and the envelope being made up of two washers (12, 13), one of which (13) includes an annular rim (14) which overlies the edge of the radiographic plate (11) close to the central hole;

b) a lead plate (15, 30) of sufficient thickness to stop the radiation backscattered from said radioactive source (7) is placed behind the radiographic plate (11);

c) the source of radioactive radiation (7) is inserted into the tube (3) of the tube bundle in a short insertion period, the source of radioactive radiation being inserted inside an insertion and ejection tube (5), being of dimensions of about 1 mm, having activity below 300 becquerels, and being inserted to sufficient distance from the tube plate (1) to enable sharp images to be recorded on the radiographic films;

d) the radiation from the source (7) is allowed to mark the films for an exposure period which is much longer than the insertion period so as to reduce the effect of radiation (7) that occurs during the insertion and ejection periods; and

e) the insertion and ejection tube (5) is withdrawn together with the radiation source (7) from the tube (3) in the bundle of tubes during a short ejection period.

2. A method according to claim 1, characterized in that the source of radioactive radiation (7) is placed at the front end of the insertion and ejection tube (5) behind a centering endpiece (9) provided with a locking member, which front end is caused to slide inside the tube (3) of the bundle of tubes doing insertion and then during ejection.

3. A method according to claim 2, characterized in that a centering ring of elastomer (10) is threaded around the tubular insertion and ejection member (5) in such a manner as to fix itself to the inlet of the tube (3) in the bundle of tubes.

4. A method according to claim 1, characterized in that the insertion and ejection tube (5) is fixed to a pneumatic actuator (20), in that it includes at least one resilient ring (39, 40) in front of the source of radioactive radiation (7), and in that the resilient ring(s) (39, 40) is/are put into compression by operating the piston (32) of the actuator (20) at the moment when the source (10) reaches the vicinity of its position for irradiating the weld fillet (4).

5. A method according to claim 4, characterized in that the resilient ring(s) (39, 40) is/are put into compression by triggering the pneumatic actuator (20) which urges a rod (37) fixed to the piston (22) of the actuator (20) in the direction for withdrawing from the tube (3) of the bundle of tubes.

6. Apparatus for implementing the method according to anyone of claims 1 to 5, the apparatus comprising a source of radioactive radiation (7) and a radiographic plate (11) comprising at least one film disposed between thin lead screens and protected from light by an envelope (12, 13) of thermoplastic material which is transparent to radioactive radiation, the apparatus being characterized in that:

a) the radiographic plate (11) is rectangular in shape and is composed by two very slow and fine-grain photographic films, and is pierced by a central hole of diameter smaller than the diameter of the tube (3), with the washers (12, 13) being pressed against the faces thereof, with one of the washers (13) including an annular rim (14) which overlies the edge of the films close to the central hole, constituting the envelope of thermoplastic material which is transparent to radioactive radiation and which is likewise rectangular;

b) the apparatus further includes a lead plate (15, 30) disposed behind the radiographic plate (11) and of sufficient thickness to stop backscattered radioactive radiation; and

c) the apparatus further includes an insertion and ejection tube (21) for inserting and ejecting the source of radioactive radiation (7), the diameter of the insertion and ejection tube being less than the inside diameter of the tube (3) of the bundle of tubes, and the front end thereof including resilient centering means (9, 39, 40) and a cavity (34) for housing the source (7).

7. Apparatus according to claim 6, characterized in that the resilient guide means are constituted by an endpiece (9) having resilient branches.

8. Apparatus according to claim 6 or 7, characterized in that it further includes an elastomer centering ring (10) whose outside diameter when the ring is in the compressed state is slightly greater than the inside diameter of the tube (3) welded to the tube plate (1).

9. Apparatus according to claim 6, characterized in that the insertion and ejection tube (21) for inserting and ejecting the source of radioactive radiation (7) is fixed to a pneumatic actuator (20) and in that its front end is formed by a spacer (36) provided with at least one radially expandable ring (39, 40).

10. Apparatus according to claim 9, characterized in that the piston (22) of the pneumatic actuator (20) is provided with a rod (37) sliding inside the spacer (36) and fixed to an endpiece (38) adjacent to the ring (39, 40) and suitable for compressing it, and in that it is disposed in the actuator (20) in such a manner as to be urged away from the radiographic film (11) when pressure is established inside the actuator (20).

11. Apparatus according to any one of claims 6 to 10, characterized in that the source of radioactive radiation is constituted by iridium 192 or by ytterbium 169.

**Patentansprüche**

1. Verfahren zur radiographischen Kontrolle der Schweißnaht (4) über die ein Ende eines Rohres eines Rohrbündels (3) auf eine Fläche eines Rohrbodens (1) angeschweißt ist, wobei man in einer Einführungsphase in das Innere des Rohres (3) und axial eine radioaktive Strahlungsquelle (7) einführt, und wobei man jenseits der Schweißnaht (4) relativ zur Strahlungsquelle (7) eine radiographische Platte (11) mit mindestens einem zwischen Bleiabschirmungen geringer Dicke angeordneten Film einführt, der gegen Licht durch eine Hülle aus thermoplastischem, für radioaktive Strahlung durchlässigem Material (12, 13) geschützt ist, worauf man die radioaktive Strahlung (7) den Film belichten läßt, die Strahlungsquelle (7) aus dem Rohr (3) des Rohrbündels zurückzieht und die Entwicklung des Films durchführt, dadurch gekennzeichnet, daß

    a) die radiographische Platte (11) und ihre Hülle eine rechteckige Form besitzen und gegen die Außenfläche des Rohrbodens (1) und den Rand des an diesen angeschweißten Rohrs (3) koaxial zur Achse des Rohrs (3) angeordnet und von einem zentralen Loch durchdrungen ist, dessen Durchmesser kleiner als der des Rohrs (3) ist, wobei die radiographische Platte (11) aus zwei sehr trägen Filmen mit feinem Korn besteht und die Hülle aus zwei Ringscheiben (12, 13) besteht, von denen die eine (13) einen ringförmigen Kragen (14) aufweist, der den Rand der radiographischen Platte (11) in der Nähe des zentralen Lochs überdeckt,

    b) hinter der radiographischen Platte (11) eine Bleiplatte (15, 30) ausreichender Dicke angeordnet wird, um die rückgestreute Strahlung der radioaktiven Quelle (7) abzufangen,

    c) man in das Rohr (3) des Rohrbündels die radioaktive Strahlungsquelle (7) im Inneren eines Einführungs- und Ausstoßrohrs (5) einführt, wobei die Abmessungen der Quelle in der Größenordnung von Millimetern und ihre Aktivität unter 300 Becquerel liegen, wobei ein Abstand vom Rohrboden (1) gewählt wird, der ausreicht, um eine Aufzeichnung auf den radiographischen Filmen bei einer kurzen Einführungsdauer mit hoher Schärfe zu bewirken,

    d) man die Strahlung der Quelle (7) auf die Filme während einer Aufnahmedauer einwirken läßt, die sehr viel größer als die Einführungsdauer ist, um den Einfluß der Strahlung (7) während den Einführungs- und Ausstoßperioden zu verringern, und daß

    e) man das Einführungs- und Ausstoßrohr (5) und die Strahlungsquelle (7) während einer kurzen Ausstoßperiode aus dem Rohr des Rohrbündels (3) entfernt.

2. Verfahren nach Anspruch 1, dadurch gekennzeichnet, daß man die radioaktive Strahlungsquelle (7) am vorderen Ende des Einführungs- und Ausstoßrohrs (5) hinter einem Zentrierkopf (9) anordnet, der ein Blockierorgan besitzt und den man in dem Rohr (3) des Rohrbündels beim Einführen und dann beim Ausstoßen gleiten läßt.

3. Verfahren nach Anspruch 2, dadurch gekennzeichnet, daß man auf das rohrförmige Einführungs- und Ausstoßorgan (5) einen Zentrierring aus Elastomermaterial (10) aufschiebt, derart, daß er sich am Eingang des Rohrs (3) des Rohrbündels festsetzt.

4. Verfahren nach Anspruch 1, dadurch gekennzeichnet, daß das Einführungs- und Ausstoßrohr (5) fest mit einem Pneumatikzylinder (20) verbunden ist, daß vor der radioaktiven Strahlungsquelle (7) mindestens ein elastischer Ring (39, 40) vorgesehen ist und daß man den mindestens einen elastischen Ring (39, 40) in dem Augenblick komprimiert, in welchem die Quelle (7) in der Nähe der radiographischen Position der Schweißnaht (4) durch Betätigung des Kolbens (22) des Pneumatikzylinders (20) angekommen ist.

5. Verfahren nach Anspruch 4, dadurch gekennzeichnet, daß das Komprimieren des mindestens einen elastischen Rings (39, 40) durch Auslösen des Hydraulikzylinders (20) bewirkt wird, wodurch eine fest mit dem Kolben (22) des Hydraulikzylinders (20) verbundene Stange (37) in Richtung der Rückziehbewegung des Rohrs (3) des Rohrbündels gezogen wird.

6. Vorrichtung zur Durchführung des Verfahrens nach einem der Ansprüche 1 bis 5, mit einer radiographischen Platte (11), die mindestens einen zwischen Bleiabschirmungen geringer Dicke angeordneten Film aufweist, der gegen Licht durch eine Hülle aus thermoplastischem Material geschützt wird, das für die radioaktive Strahlung (12, 13) durchlässig ist, und mit einer radioaktiven Strahlungsquelle (7), dadurch gekennzeichnet, daß

    a) die radiographische Platte (11) eine rechteckige Form besitzt und aus zwei sehr trägen photographischen Filmen mit feinem Korn besteht und daß sie ein zentrales Loch mit einem kleineren Durchmesser als dem des Rohres (3) aufweist, wobei auf den Flächen der Platte Ringscheiben (12, 13) anliegen, von denen die eine (13) einen ringförmigen Kragen (14) aufweist, der die Kante der Filme in der Nähe des zentralen Lochs überdeckt, und wobei die Ringe die Hülle aus thermoplastischem Material bilden, die für die radioaktive Strahlung durchlässig und ebenfalls rechteckig ist,

b) die Vorrichtung weiter eine Bleiplatte (15, 30) ausreichender Dicke für den Schutz gegen rückgestreute radioaktive Strahlung hinter der radiographischen Platte (11) besitzt,

c) die Vorrichtung weiter ein Einführungs- und Ausstoßrohr (21) für die radioaktive Strahlungsquelle (7) aufweist, dessen Innendurchmesser kleiner als der Innendurchmesser des Rohrs (3) des Rohrbündels ist und das an seinem vorderen Ende elastische Zentriermittel (9, 39, 40) und anschließend eine Aufnahmekammer (34) für die Quelle (7) besitzt.

7. Vorrichtung nach Anspruch 6, dadurch gekennzeichnet, daß die elastischen Führungsmittel aus einem Kopf (9) mit elastischen Armen bestehen.

8. Vorrichtung nach Anspruch 6 oder 7, dadurch gekennzeichnet, daß sie weiter einen Zentrierring (10) aus einem Elastomermaterial aufweist, dessen Außendurchmesser etwas größer als der Innendurchmesser des an den Rohrboden (1) angeschweißten Rohrs (3) im Zustand der Kompression ist.

9. Vorrichtung nach Anspruch 6, dadurch gekennzeichnet, daß das Einführungs- und Ausstoßrohr (21) für die radioaktive Strahlungsquelle (7) fest mit einem Pneumatikzylinder (20) verbunden ist und daß sein vorderes Ende aus einem Zwischenstück (36) besteht, das mit mindestens einem radial expandierbaren Ring (39, 40) versehen ist.

10. Vorrichtung nach Anspruch 9, dadurch gekennzeichnet, daß der Kolben (22) des Pneumatikzylinders (20) mit einer Stange (37) ausgestattet ist, die im Zwischenstück (36) gleitet und fest mit einem dem Ring (39, 40) benachbarten Kopf (38) verbunden ist und den Ring zusammendrücken kann, und daß der Kolben im Zylinder (20) derart angeordnet ist, daß er relativ zum radiographischen Film (11) bei der Herstellung des Drucks im Zylinder (20) zurückgestoßen werden kann.

11. Verfahren nach einem der Ansprüche 6 bis 10, dadurch gekennzeichnet, daß die radioaktive Strahlungsquelle aus Iridium 192 oder Ytterbium 169 besteht.

# F I G.1

# FIG. 2

EP 0 262 015 B1

FIG. 3